# EUROPÄISCHE PATENTSCHRIFT

(11) **EP 1 671 044 B1**
(45) Veröffentlichungstag und Bekanntmachung des Hinweises auf die Patenterteilung: **07.12.2011**
(21) Anmeldenummer: 04764703.7
(22) Anmeldetag: 01.09.2004
(51) Int. Cl.: F16D 3/224

(54) **GLEICHLAUFFESTGELENK MIT GEKREUZTEN KUGELLAUFBAHNEN, GELENKWELLE UND VERFAHREN ZUR HERSTELLUNG EINES SOLCHEN**
CONSTANT VELOCITY JOINT HAVING CROSSED RACEWAYS, UNIVERSAL JOINT SHAFT AND METHOD FOR PRODUCING IT
JOINT HOMOCINETIQUE FIXE POURVU DE CHEMINS DE ROULEMENT A BILLES CROISES, ARBRE ARTICULE ET PROCEDE DE PRODUCTION DU MÊME

(30) Priorität: 30.09.2003 DE 10345483; 28.06.2004 DE 102004031154
(43) Veröffentlichungstag der Anmeldung: 21.06.2006
(73) Patentinhaber: Volkswagen Aktiengesellschaft, 38436 Wolfsburg (DE)
(72) Erfinder: CLEMM, Oliver, 30161 Hannover (DE); SCHAAF, Gregor, 38106 Braunschweig (DE)
(74) Vertreter: Beck, Michael Rudolf
(86) Internationale Anmeldenummer: PCT/EP2004/009742
(87) Internationale Veröffentlichungsnummer: WO 2005/042995

(56) Entgegenhaltungen:
- GB-A- 430 859
- GB-A- 637 718
- GB-A- 760 681
- GB-A- 987 572
- US-A1- 2002 077 185
- US-A1- 2002 151 369
- US-A1- 2004 072 622

## Beschreibung

Die Erfindung bezieht sich auf ein Gleichlauffestgelenk mit gekreuzten Kugellaufbahnen, umfassend ein Gelenkaußenteil und ein Gelenkinnenteil mit einander paarweise zugeordneten, gekreuzten Kugellaufbahnen, Kugeln, die in den Kugellaufbahnpaaren angeordnet sind, und einen Käfig, der an einem der beiden Gelenkteile festgelegt ist und Fenster zur Aufnahme der Kugeln aufweist.

Weiterhin bezieht sich die Erfindung auf eine Gelenkwelle mit einem solchen Gleichlauffestgelenk sowie schließlich auf ein Verfahren zur Herstellung eines solchen.

Gleichlaufgelenke mit gekreuzten Kugellaufbahnen sind aus dem Stand der Technik bereits seit langem bekannt. So werden in Kraftfahrzeugen Gleichlaufgelenke mit gekreuzten Laufbahnen in Gelenkwellen üblicherweise als getriebeseitige Verschiebegelenke eingesetzt. Bei Fahrzeugen mit Heckantrieb kommen sie auch auf der Radseite der Antriebsgelenkwelle zum Einsatz.

Durch ein axiales Festlegen des Käfigs entweder am Gelenkaußenteil oder am Gelenkinnenteil entsteht ein Festgelenk, das je nach Ausführung für Beugewinkel von bis zu ca. 25 Grad einsetzbar ist. Üblicherweise ist hierbei der Käfig an einer Käfigführungsfläche geführt, welche unter axialer Festlegung des Käfigs gleichzeitig die Schwenkbewegbarkeit des Gelenks gewährleistet. Gelenke dieser Art sind beispielsweise aus der DE 199 56 672 C1, der DE 42 28 230 A1 und der US 6,497,622 A bekannt.

Dokument US2002/0094230 offenbart
Ein Gleichlauffestgelenk, umfassend:
ein Gelenkaussenteil und ein Gelenkinnenteil mit einander paarweise zugeordneten Kugellaufbahnen,
Kugeln, die in den Kugellaufbahnpaaren angeordnet sind, einen Käfig, der an einem der beiden Gelenkteile festgelegt ist und Fenster zur Aufnahme der Kugeln aufweist,
wobei der Käfig axial in einer Richtung durch einen Abschnitt einer Käfigführungsfläche an dem Gelenkteil und in der entgegengesetzten Richtung durch einen Anschlag an einem separaten, an dem Gelenkteil vorgesehenen Abschlusselement festgehalten ist,
wobei der Käfig koaxial in das Gelenkteil ein- bzw. auf das Gelenkteil aufschiebbar ist,
und wobei das Anschlusselement bei ein - bzw. aufgeschobenem Käfig an dem Gelenkteil befestigbar ist.

Allerdings ist die Montage der Gelenke mit gekreuzten Kugellaufbahnen sehr aufwendig. Üblicherweise ist es dabei erforderlich, den Käfig vor den Kugeln zu montieren. Hernach sind das Gelenkinnenteil und der Käfig gegenüber dem Außenteil zu überbeugen, das heißt weiter als über den maximalen Betriebsbeugewinkel anzuwinkeln, um die Kugeln in die Fenster des Käfigs einzusetzen.

Insbesondere bei einseitig geschlossenen, glockenartigen Gelenkaußenteilen ergeben sich durch dieses Montagekonzept relativ große und damit auch schwere Konstruktionen, da für den bei der Montage weit nach innen schwenkenden Käfig und die zum Gelenkboden laufenden Kugeln ausreichend Platz vorgesehen werden muss. Die entsprechend lang auszuführenden Kugellaufbahnen bedingen einen hohen Bearbeitungsaufwand.

Ein weiterer Nachteil des dargestellten Montagekonzepts liegt in dessen schlechter Automatisierbarkeit.

Vor diesem Hintergrund liegt der Erfindung die Aufgabe zu Grunde, die Fertigung eines Gleichlaufftgelenks der eingangs genannten Art zu verbessern.

Diese Aufgabe wird durch ein Gleichlauffestgelenk mit den Merkmalen von Patentanspruch 1 gelöst. Dieses umfasst ein Gelenkaußenteil und ein Gelenkinnenteil mit einander paarweise zugeordneten, gekreuzten Kugellaufbahnen, Kugeln, die in den Kugellaufbahnpaaren angeordnet sind, und einen Käfig, der an einem der beiden Gelenkteile festgelegt ist und Fenster zur Aufnahme der Kugeln aufweist. Das Gelenk zeichnet sich dadurch aus, dass der Käfig axial in einer Richtung durch einen Abschnitt einer Käfigführungsfläche an dem Gelenkteil und in der entgegengesetzten Richtung durch einen Anschlag an einem separaten, an dem Gelenkteil vorgesehenen Abschlusselement festgehalten ist.

Durch die Verteilung der Anlaufflächen für den Käfig auf zwei auf separate Komponenten wird eine einfache axiale Montage möglich, bei der das Einschwenken der Innenteile und das Montieren der Kugeln durch ein Überbeugen des Gelenks entfällt.

Vielmehr kann bei der Montage so vorgegangen werden, dass zunächst eine vormontierte Einheit aus einem Gelenkteil, einem Käfig und mehreren Kugeln durch eine reine Axialbewegung mit einem weiteren Gelenkteil zusammengeführt wird und hernach das Abschlusselement an dem letztgenannten Gelenkteil befestigt wird, das im zusammengebauten Zustand den Käfig axial festlegt.

Die Kugellaufbahnen müssen daher nicht länger als für den maximalen Betriebsbeugewinkel nötig ausgeführt werden, so dass der Bearbeitungsaufwand sinkt. Gleichzeitig kann das betreffende Gelenkteil mit geringerer axialer Baulänge ausgeführt werden. Hieraus resultiert wiederum ein niedrigeres Bauteilgewicht.

Die kürzere Baulänge ermöglicht in einer Gelenkwelle mit zwei Gelenken außerdem einen größeren Abstand der Gelenkmittelpunkte. Hieraus resultieren geringere Gelenkbeugewinkel an beiden Gelenken und daraus wiederum eine verbesserte Lebensdauer, ein höherer Wirkungsgrad sowie gegebenenfalls größere mögliche Lenkwinkel.

Gemäß einer vorteilhaften Ausgestaltung der Erfindung ist die Innenkontur des einen Gelenkteils abgesehen von den Kugellaufbahnen hinterschnittsfrei ausgebildet. Ein Abschnitt dieser Innenkontur bzw. Käfigführungsfläche dient als Anlauffläche für den Käfig in einer ersten Axialrichtung, während das Abschlusselement im Bereich des hinterschnittsfreien Endes der Käfigführungsfläche eine weitere Anlauffläche zur axialen Festlegung des Käfigs ausbildet. Im Prinzip entspricht das Gleichlauffestgelenk bis zur Festlegung des Käfigs durch das Abschlusselement einem Verschiebegelenk. Es ist daher möglich, Komponenten von VL-Gelenken für das erfindungsgemäße Gleichlauffestgelenk zu verwenden und dadurch die Bauteilvielfalt gering zuhalten.

Vorzugsweise weist die hinterschnittsfreie Innenkontur eine sphärische Anlauffläche auf, die dazu dient, den Käfig in einer Richtung axial zu sichern. Jedoch können auch andere, nicht-sphärische Oberflächenformen zur Axialsicherung des Käfigs vorgesehen werden. Zudem ist ein Axialspiel des Käfigs in der Größe bis zu etwa 1 mm tolerierbar.

Auch die Anlauffläche an dem Anschlusselement, welche der Abstützung des Käfigs in der entgegengesetzten Richtung dient, kann sphärisch ausgebildet sein. Im zusammengebauten Zustand fallen je nach Axialspiel die Mittelpunkte der Anlaufflächen an dem Anschlusselement und der Käfigführungsfläche des Gelenkteils in etwa oder auch exakt zusammen. Der Käfig ist entsprechend mit einer korrespondierenden sphärischen Fläche an den Anlaufflächen geführt, um die Schwenkbewegbarkeit des Gelenks zu gewährleisten.

Prinzipiell ist es denkbar, eine entsprechende Anordnung entweder am Gelenkaußenteil oder am Gelenkinnenteil vorzusehen. So kann beispielsweise die hinterschnittsfreie Käfigführungsfläche mit einem ersten Abschnitt und der angrenzenden Anlauffläche an einer Innenwand des Gelenkaußenteils ausgebildet sein. Genauso ist es jedoch möglich, den Käfig am Gelenkinnenteil schwenkbar zu führen und axial festzulegen.

Gemäß einer vorteilhaften Ausgestaltung der Erfindung ist das Gelenkaußenteil als einseitig geschlossene Glocke ausgebildet, wobei der erste Abschnitt der Kugelführungsfläche an der offenen Seite liegt und die Anlauffläche in Richtung des Gelenksbodens angrenzt. Bei dieser Ausführungsform macht sich die Verringerung der Bauteillänge infolge des oben erläuterten Montagekonzepts besonders deutlich bemerkbar.

Das Abschlusselement, das vorzugsweise nach einem axialen Ein- bzw. Aufschieben des Käfigs an dem Gelenkteil befestigt wird, kann in diesem Fall als Deckel ausgebildet sein, der an dem Gelenkaußenteil befestigt ist, und zwar an derjenigen Seite, der gegenüber der Anlauffläche liegt. Bei der Montage wird folglich der Käfig axial so weit eingeschoben, bis dieser an der beispielsweise sphärischen Anlauffläche der Kugelführungsfläche des Gelenkaußenteils anliegt. Hernach wird der Käfig über den Deckel axial gesichert. Dabei kann die sphärische Fläche am Anschlag die Kugelform der sphärischen Anlauffläche des Gelenkaußenteils nach der Unterbrechung durch den ersten Abschnitt am Deckel fortsetzen, sofern die Käfigführung im wesentlichen spielfrei ausgestaltet wird.
Weiterhin kann der Deckel einen Anschlussabschnitt für einen Faltenbalg aufweisen

Bevorzugt ist der Deckel an einer Außenumfangswand des Gelenkaußenteils befestigt. Die Befestigung erfolgt vorzugsweise formschlüssig, jedoch sind auch andere Befestigungstechniken möglich.

Aufgrund seiner einfachen Form kann der Deckel besonders kostengünstig als Blechumformteil ausgebildet sein.

Über eine umlaufende Vertiefung in dem Deckel, welche die Kugeln bei maximaler Gelenkbeugung teilweise aufnimmt, lässt sich auch bei großen Beugewinkeln eine kurze Baulänge des Gelenks aufrechterhalten.

Gemäß einer weiteren, vorteilhaften Ausgestaltung weist die Glocke des Außenteils einen Wellenansatz auf, der dem Einführen in eine Radnabe dient. Hierdurch lassen sich insbesondere bei einem Einsatz des Gleichlauffestgelenks auf der Radseite einer Hinterachsseitenwelle sehr leichte und kostengünstige Gelenke realisieren.

Zur Vermeidung eines verstärkten Anlaufs des Käfigs gegen das Abschlusselement kann in einer weiteren, vorteilhaften Ausgestaltung der Erfindung der durch die Kugellaufbahnen definierte Teilkreisdurchmesser (PCD) in Richtung der dem Abschlusselement bzw. Deckel gegenüberliegenden Seite hin zunehmend ausgestaltet werden. In diesem Fall besitzen die Gelenkinnenbauteile dann die Tendenz, verstärkt gegen die vorzugsweise gehärtete Anlagefläche im Gelenkaußenteil anzulaufen. Dadurch wird ein vorzeitiger Verschleiß des Abschlusselements bzw. Deckels sowie eine unerwünschte, selbsttätige Demontage desselben vermieden.

In einer vorteilhaften Ausgestaltung können hierzu die Kugellaufbahnen am Gelenkaußenteil und/oder am Gelenkinnenteil in Richtung der dem Abschlusselement bzw. Deckel gegenüberliegenden Seite konisch zulaufen.

Weiterhin besteht die Möglichkeit, durch geringfügig unterschiedliche Laufbahnschrägungswinkel am Gelenkaußenteil und am Gelenkinnenteil eine Selbstzentrierung des Käfigs auf die Mittelstellung zu bewirken und dadurch eine Entlastung des Deckels zu erreichen.

Gemäß einer weiteren, vorteilhaften Ausgestaltung kann das Abschlusselement bzw. der Deckel zumindest im Bereich des Anschlags einem verschleißmindernden Verfahren unterzogen worden sein. Insbesondere kann das Abschlusselement insgesamt oder selektiv im Bereich des Anschlags gehärtet oder nitriert sein. Weiterhin ist es möglich, an dem Abschlusselement im Bereich des Anschlags einen Ring aus einem verschleißfesten Material zu applizieren.

Eine Entlastung des Abschlusselements bzw. Deckels kann auch durch eine axiale Sicherung des Käfigs nach der Montage erfolgen. Hierzu wird gemäß einer weiteren, vorteilhaften Ausgestaltung der Erfindung der Käfig durch mindestens einen Vorsprung an der zu dem Abschlusselement bzw. Deckel weisenden Seite des Gelenkaußenteils oder Gelenkinnenteils axial gesichert. Der mindestens eine Vorsprung kann dabei ein nach der Käfigmontage verformter Abschnitt des Gelenkaußenteils oder Gelenkinnenteils sein, oder aber ein an dem Gelenkaußenteil oder Gelenkinnenteil angebrachtes zusätzliches Sicherungselement

Das erfindungsgemäße Gleichlauffestgelenk eignet sich für Gelenkwellen, insbesondere Seitenwellen von Kraftfahrzeugen. Wie vorstehend genannt, wird dieses in einer solchen bevorzugt radseitig angeordnet, ohne dass hiermit jedoch eine getriebeseitige Verwendung ausgeschlossen werden soll.

Nachfolgend wird die Erfindung anhand eines in der Zeichnung dargestellten Ausführungsbeispiels näher erläutert. Die Zeichnung zeigt in:
- Figur 1: eine Schnittansicht eines erfindungsgemäßen Gleichlauffestgelenks als radseitiges Gelenk einer Hinterachsseitenwelle in nicht-angewinkelter Stellung,
- Figur 2: eine weitere Schnittansicht des erfindungsgemäßen Gleichlauffestgelenks, und in
- Figur 3: eine Schnittansicht entsprechend Figur 1 in angewinkelter Stellung.

Das Ausführungsbeispiel zeigt ein Gleichlauffestgelenk 1 mit gekreuzten Kugellaufbahnen, das hier beispielhaft als radseitiges Gelenk einer Seitenwelle, insbesondere Hinterachsseitenwelle 2 eines Kraftfahrzeugs dargestellt ist. In modifizierter Ausführung ist auch ein getriebeseitiger Einsatz möglich. Jedoch kann das nachfolgend näher erläuterte Gleichlauffestgelenk 1 auch zu anderen Zwecken unabhängig von einer Gelenkwelle eingesetzt werden.

Das Gleichlauffestgelenk 1 nach dem Ausführungsbeispiel umfasst ein Gelenkaußenteil 3, das an einer Innenumfangfläche mit einer Vielzahl von Kugellaufbahnen 4 versehen ist. In dem Gelenkaußenteil 3 ist ein Gelenkinnenteil 5 aufgenommen, das an einer Außenumfangsfläche ebenfalls mit einer Vielzahl von Kugellaufbahnen 6 versehen ist. Die Kugellaufbahnen 4 und 6 an dem Gelenkaußenteil 3 und dem Gelenkinnenteil 5 bilden Kugellaufbahnpaare, die jeweils eine Kugel 7 aufnehmen, um die beiden Gelenkteile 3 und 5 radial aneinander abzustützen. Dabei sind sowohl die Kugellaufbahnen 4 des Gelenkaußenteils 3 als auch die Kugellaufbahnen 6 des Gelenkinnenteils 5 zur jeweiligen Bauteilmittelachse A angewinkelt. Die Anstellwinkel zur Mittelachse A sind zumindest für korrespondierende oder aber auch für alle Kugellaufbahnen 4 bzw. 6 dem Betrag nach gleich groß, unterscheiden sich jedoch hinsichtlich des Vorzeichens für das Gelenkaußenteil 3 und das Gelenkinnenteil 5, so dass sich die Laufbahnen 4 und 6 eines Laufbahnenpaars stets kreuzen.

Zwischen dem Gelenkaußenteil 3 und dem Gelenkinnenteil 5 ist ein Käfig 8 angeordnet, der an einem der beiden Gelenkteile, hier dem Gelenkaußenteil 3 schwenkbar gelagert und gleichzeitig axial festgelegt ist. Dabei sind am Gelenk Beugewinkel von bis zu 25 Grad möglich. Der Käfig 8 weist eine Vielzahl von Fenstern 8a zur Aufnahme der Kugeln 7 auf, so dass diese bei einer Beugung des Gelenks stets in einer gemeinsamen Ebene, nämlich der Halbwinkelebene gehalten werden.

Die Schwenkbewegbarkeit des Käfigs 8 wird über Käfigführungsflächen 9 am Innenumfang des Gelenkaußenteils 3 gewährleistet. Bei herkömmlichen Gleichlauffestgelenken sind die Käfigführungsflächen so ausgebildet, dass der Käfig über diese axial in beide Richtungen gesichert ist. Dies führt allerdings zu einer aufwändigen Montage des Käfigs, da dieser in einer verkippten Stellung in das Gelenkaußenteil eingeführt werden muss. Bei dem hier dargestellten Ausführungsbeispiel wird dieses Problem umgangen, indem die Käfigführungsflächen 9 bei Betrachtung in Richtung der Bauteilmittelachse A hinterschnittsfrei ausgeführt sind.

Dadurch kann der an seinem Außenumfang 10 sphärisch gewölbte Käfig 8 axial in das Gelenkaußenteil 3 eingeführt werden. Der Außenumfang 10 des Käfigs 8 gleitet dabei zunächst über einen hinterschnittsfreien ersten Abschnitt 9a, bis er gegen eine Anlauffläche 9b anschlägt. Diese kann sphärisch gewölbt sein. Der Wölbungsdurchmesser entspricht dann vorzugsweise in etwa demjenigen des Käfigs 8. Der hinterschnittsfreie erste Abschnitt 9a geht dabei tangential in die Anlauffläche 9b über. Anstelle einer Wölbung können als Anlauffläche 9b auch andere hinterschnittsfreie Oberflächenkonturen vorgesehen werden, solange diese die Schwenkbewegbarkeit des Käfigs nicht beeinträchtigen.

Auf diese Weise lässt sich der Käfig 8 axial jedoch lediglich in einer Richtung festlegen. Die Axialsicherung in Gegenrichtung übernimmt ein separates Abschlusselement 11, das nach erfolgter Montage des Käfigs 8 an dem Gelenkaußenteil 3 befestigt wird. Im zusammengebauten Zustand ist der Käfig 8 folglich axial in einer Richtung durch einen Abschnitt 9b einer Käfigführungsfläche 9 an dem Gelenkaußenteil 3 und in der entgegengesetzten Richtung durch einen Anschlag 12 an dem separaten, am Gelenkaußenteil 3 vorgesehenen Abschlusselement 11 festgehalten.

Auch der Anschlag 12 an dem Anschlusselement 11 kann als sphärische Anlauffläche ausgebildet sein. Im zusammengebauten Zustand des dargestellten Gelenks 1 fallen die Mittelpunkte der sphärischen Flächen an dem Anschlusselement 11 und dem Gelenkaußenteil 3 zusammen. Der Käfig 8 ist an diesen mit einem ebenfalls sphärischen Außenumfang 10 oder sphärischen Abschnitten an seinem Außenumfang schwenkbeweglich geführt. Wird die Kontaktfläche zwischen dem Anschlag 12 und dem Käfig 8 sehr klein, so ist eine sphärische Ausgestaltung an dem Anschlag 12 nicht zwingend notwendig. Es kann bereits ausreichend sein, diesen auf einer gedachten Kugelfläche um den Mittelpunkt der sphärischen Flächen 9b anzuordnen, um die erforderliche Axialsicherung des Käfigs 8 bei Gewährleistung einer Schwenkbewegbarkeit zu realisieren.

In einer Abwandlung des dargestellten Ausführungsbeispiels wird ein geringes Axialspiel vorgesehen, das bis zu 1 mm beträgt. In diesem Fall ergibt sich ein geringer Versatz der Drehmittelpunkte der nicht notwendigerweise sphärischen Anlaufflächen 9b und 12.

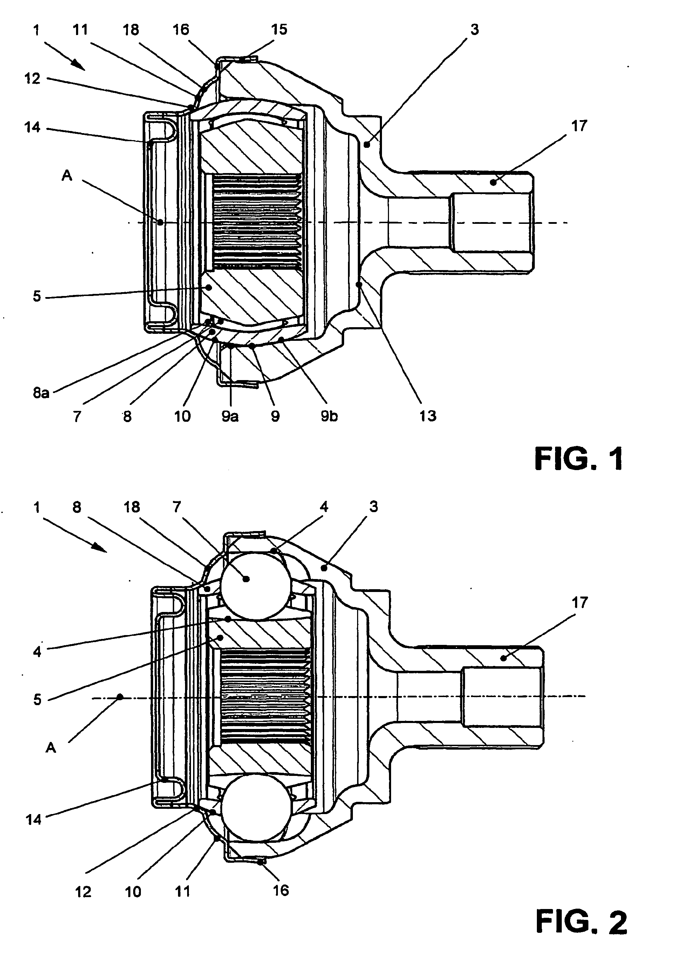

Die vorstehend erläuterte Konfiguration, welche eine besonders geringe axiale Baulänge des Gelenkaußenteils 3 ermöglicht, eignet sich hervorragend für geschlossene Gelenkaußenteile 3, da sich bei diesen das hier vorgestellte axiale Montagekonzept besonders deutlich auf die Verkürzung der Baulänge auswirkt. Ein solches Gelenkaußenteil 3 ist in den Figuren 1 bis 3 gezeigt. Jedoch kann die erfindungsgemäße Konfiguration selbstverständlich auch bei scheibenförmigen, axial beidseitig offenen Gelenkaußenteilen eingesetzt werden, die dadurch günstiger herstellbar sind, da die Innenkontur auch hierbei fertiggeschmiedet werden kann. Auch wird die Montage hierbei einfacher.

Bildet das Gelenkaußenteil 3 eine einseitig geschlossene Glocke, so wird der hinterschnittsfreie Abschnitt 9a der Kugelführungsfläche 9 an der offenen Seite angeordnet. Der sphärische Abschnitt 9b schließt in Richtung des Gelenksbodens 13 an. An der gegenüberliegenden Seite des Gelenksbodens 13 kann an dem Gelenkaußenteil 3 ein Wellenansatz 17 vorgesehen werden, der in eine Radnabe einsteckbar ist. Hierdurch lässt sich insbesondere für Hinterachsseitenwellen ein sehr leichtes und kostengünstiges radseitiges Gelenk realisieren.

Das Abschlusselement 11 ist vorzugsweise als Deckel ausgebildet, der gleichzeitig als Anschluss für einen hier nicht näher dargestellten Faltenbalg dient. Die Figuren 1 und 2 zeigen lediglich den zugehörigen Anschlussabschnitt 14.

Das Abschlusselement 11 bzw. der Deckel ist an derjenigen Seite des Gelenkaußenteils 3 befestigt, zu welcher hin der hinterschnittsfreie Abschnitt 9a ausläuft. Vorzugsweise erfolgt die Befestigung des Deckels an einer Außenumfangswand des Gelenkaußenteils 3. Bei dem hier dargestellten Ausführungsbeispiel greift ein Vorsprung 15 an einem umlaufenden Flansch 16 in eine an dem Gelenkaußenteil 3 ausgebildete Nut ein, um den Deckel formschlüssig axial zu sichern. Selbstverständlich sind jedoch auch andere Befestigungsmöglichkeiten denkbar.

Weiterhin kann der Deckel als Blechumformteil sehr einfach und kostengünstig hergestellt werden. Durch eine an diesem vorgesehene umlaufende Vertiefung 18 werden die Kugeln 7 bei maximaler Gelenkbeugung platzsparend aufgenommen.

Zur Vermeidung eines übermäßigen Verschleißes des Abschlusselements 11 bzw. Deckels infolge eines Anlaufens des Käfigs 8 sind im folgenden näher erläuterte Maßnahmen möglich, die sich einzeln oder auch in Kombination miteinander einsetzen lassen. Diesen liegt die Überlegung zu Grunde, entweder die Verschleißfestigkeit der betroffenen Bauelemente zu erhöhen, oder aber eine Bewegung der Gelenkinnenbauteile in Richtung des Deckels zu vermeiden. Insbesondere im letztgenannten Fall wird durch die Entlastung des Deckels ein Absprengen desselben unter ungünstigen Betriebszuständen, wie beispielsweise beim Durchfahren eines Schlaglochs vermieden.

Durch eine variable Gestaltung des Teilkreisdurchmessers (PCD) kann ein gezielter Anlauf des Käfigs 8 gegen die am Gelenkaußenteil 3 befindliche Anlauffläche 9b der Käfigführungsfläche 9 erzielt werden. Durch ein Härten der Anlauffläche 9b wird dort einem vorschnellen Verschleiß vorgebeugt.

Dazu werden die Kugellaufbahnen 4 bzw. 6 derart konfiguriert, dass der Teilkreisdurchmesser (PCD) in Richtung von dem Abschlusselement 11 bzw. Deckel weg zunimmt. Dies lässt sich beispielsweise durch ein konisches Zulaufen der Kugellaufbahnen 4 bzw. 6 am Gelenkaußenteil 3 und/oder am Gelenkinnenteil 4 in Richtung der dem Deckel gegenüberliegenden Seite realisieren. Der Käfig 8 hat dann im Betrieb die Tendenz, sich von dem Deckel weg zu bewegen, wodurch dieser entlastet wird.

Ein ähnlicher Effekt lässt sich durch geringfügig unterschiedliche Laufbahnschrägungswinkel am Gelenkaußenteil 3 und am Gelenkinnenteil 4 erzielen. In diesem Fall gibt es unter Gelenkbeugung keinen exakten Schnittpunkt der Laufbahnenachsen. Infolgedessen werden die Kugeln nur unter Verformung der Gelenkbauteile einen Aufenthaltsort finden. Die hiermit verbundene Verformungsarbeit wird umso größer, je weiter sich das Gelenk aus der Mittelstellung verschiebt. Hieraus resultiert eine Selbstzentrierung des Gelenks, da sich im Betrieb die geringste Verformungsarbeit in der Mittelstellung einstellt: Hierdurch werden erhöhte Axialkräfte am Abschlusselement 11 bzw. Deckel vermieden.

Zum weiteren Verschleißschutz kann das Abschlusselement bzw. der Deckel zumindest im Bereich des Anschlags 12 gehärtet, nitriert oder einem sonstigen verschleißmindernden Verfahren unterzogen worden sein. Weiterhin ist es möglich, im Bereich des Anschlags 12 einen Ring aus einem verschleißfesten Material zu applizieren, beispielsweise in den Deckel einzulegen, einzukleben, einzuklemmen oder dergleichen.

Schließlich besteht die Möglichkeit, den Käfig 8 nacherfolgter Montage axial zu sichern, um eine selbsttätige Demontage des Gelenks zu unterbinden. Dazu kann an der zu dem Abschlusselement 11 bzw. Deckel weisenden Seite des Gelenkaußenteils 3 oder Gelenkinnenteils 4 mindestens ein Sicherungsvorsprung vorgesehen werden. Dieser ist beispielsweise ein nach der Käfigmontage verformter Abschnitt des Gelenkaußenteils 3 oder des Gelenkinnenteils 4. So kann zum Beispiel nach der Montage des Gelenks die Käfigführungsbahn im Gelenkaußenteil 3 in Richtung der offenen Seite partiell plastisch verformt, beispielsweise verstemmt werden. Ebenso kann das Gelenkinnenteil 4 durch Verstemmen oder dergleichen soweit aufgeweitet werden, dass es gegenüber dem Käfig 8 nicht mehr axial bewegbar ist.

Ebenfalls denkbar sind zusätzliche Sicherungselemente, die nach der Montage in das Gelenk eingebracht werden und dort die axiale Bewegung zwischen dem Käfig 8 und dem Gelenkaußenteil 3 oder dem Käfig 8 und dem Gelenkinnenteil 4 verhindern.

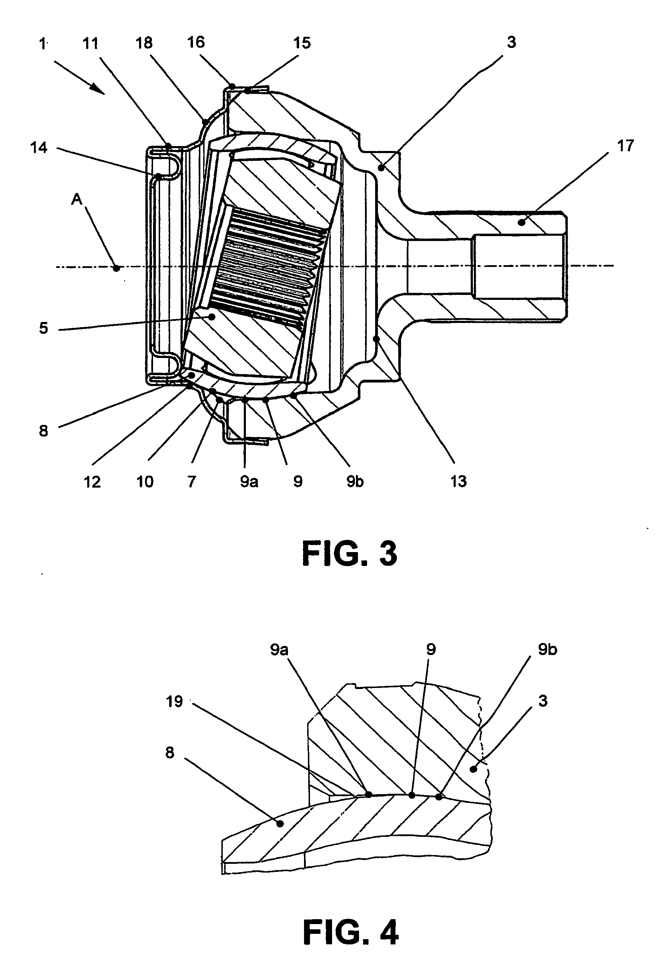

Figur 4 zeigt eine weitere Möglichkeit, ein Wandern der Gelenkinnenbauteile in Richtung des Abschlusselements 11 bzw. Deckels zu verhindern. Hierzu ist an dem hinterschnittsfreien Abschnitt 9a der Führungsfläche 9 ein Ringvorsprung 19 ausgebildet, dessen Innendurchmesser geringfügig kleiner ist, als der Außendurchmesser des Käfigs 8. Bei der Gelenkmontage wird der Käfig 8 an dem Ringvorsprung 19 vorbei in das Gelenkaußenteil 3 gedrückt, wobei sich der Käfig 8 und das Gelenkaußenteil 3 lediglich kurzzeitig elastisch verformen. Der Ringvorsprung 19 ist dabei so positioniert, dass dieser den Käfig 8 in der vorgesehenen Einbaulage gerade nicht berührt. Beginnt der Käfig 8 jedoch in Richtung des Abschlusselements 11 zu wandern, so wird dies durch ein Anlaufen an dem Vorsprung 19 begrenzt. Zudem kann durch den Ringvorsprung 19 ein Überbeugen des Gelenks vermieden werden.

Insgesamt ergibt sich damit ein Gleichlauffestgelenk 1 mit gekreuzten Laufbahnen, das sich sehr einfach montieren lässt. Die Montage lässt sich vor allem auch gut automatisieren. Bei dieser werden zunächst das Gelenkinnenteil 5, der Käfig 8 und die Kugeln 7 zu einer Einheit zusammengefügt. Diese Einheit wird dann durch eine reine Axialbewegung mit dem Gelenkaußenteil 3 zusammengeführt. Anschließend wird das Abschlusselement 11 bzw. der Deckel an dem Gelenkaußenteil 3 befestigt, um so den Käfig 8 axial festzulegen. Ein Verschwenken des Käfigs 8 oder des Gelenkinnenteils 5 gegenüber dem Gelenkaußenteil 3 ist dabei nicht nötig. Auch ein Überbeugen des Gelenks zum Zweck der Montage der Kugeln 7 entfällt.

Dadurch ergibt sich eine besonders kompakte und leichtgewichtige Ausführung eines Gleichlauffestgelenks mit gekreuzten Laufbahnen. Dieser Vorteil kommt besonders bei sogenannten Monoblock-Ausführungen zum Tragen, bei denen das Gelenkaußenteil an einer Seite geschlossen ist.

### BEZUGSZEICHENLISTE

- 1: Gleichlauffestgelenk
- 2: Gelenkwelle
- 3: Gelenkaußenteil
- 4: Kugellaufbahn
- 5: Gelenkinnenteil
- 6: Kugellaufbahn
- 7: Kugel
- 8: Käfig
- 8a: Fenster
- 9: Käfigführungsfläche
- 9a: erster hinterschnittsfreier Abschnitt der Käfigführungsfläche 9
- 9b: Anlauffläche der Käfigführungsfläche 9
- 10: sphärische Außenumfangsfläche des Käfigs 8
- 11: Abschlusselement (Deckel)
- 12: Anschlag bzw. Anlauffläche des Abschlusselements 11
- 13: Gelenkboden
- 14: Anschlussabschnitt
- 15: Vorsprung
- 16: Flansch
- 17: Wellenansatz
- 18: umlaufende Vertiefung
- 19: Ringvorsprung
- A: Bauteilmittelachse

## Patentansprüche

1. Gleichlauffestgelenk mit gekreuzten Kugellaufbahnen, umfassend:
- ein Gelenkaußenteil (3) und ein Gelenkinnenteil (5) mit einander paarweise zugeordneten, gekreuzten Kugellaufbahnen (4, 6),
- Kugeln (7), die in den Kugellaufbahnpaaren (4, 6) angeordnet sind, und
- einen Käfig (8), der an einem der beiden Gelenkteile (3, 5) festgelegt ist und Fenster (8a) zur Aufnahme der Kugeln (7) aufweist, **dadurch gekennzeichnet, dass** der Käfig (8) axial in einer Richtung durch einen Abschnitt (9b) einer Käfigfühmngsfläche (9) an dem Gelenkteil (3, 5) und in der entgegengesetzten Richtung durch einen Anschlag (12) an einem separaten, an dem Gelenkteil (3, 5) vorgesehenen Abschlusselement (11) festgehalten ist,
dass der Käfig (8) koaxial in das Gelenkteil ein- bzw. auf das Gelenkteil aufschiebbar ist, und
dass das Abchlusselement (11) bei ein- bzw. aufgeschobenem Käfig (8) an dem Gelenkteil (3, 5) befestigbar ist.

2. Gleichlauffestgelenk nach Anspruch 1, **dadurch gekennzeichnet, dass** das eine Gelenkteil (3, 5) eine Innenkontur mit einer hinterschnittsfreien Käfigführungsfläche (9) aufweist und das Abschlusselement (11) und die Käfigführungsfläche (9) einander gegenüberliegende Anlaufflächen (9b, 12) zur axialen Festlegung des Käfigs (8) ausbilden.

3. Gleichlauffestgelenk nach Anspruch 2, **dadurch gekennzeichnet, dass** die Anlauffläche (9b) der Käfigführungsfläche (9) zur axialen Abstützung des Käfigs (8) sphärisch ausgebildet ist und unmittelbar an einen ersten hinterschnittsfreien Abschnitt (9a) angrenzt.

4. Gleichlauffestgelenk nach Anspruch 3, **dadurch gekennzeichnet, dass** die Anlauffläche (12) an dem Abschlusselement (11) sphärisch ausgebildet ist.

5. Gleichlauffestgelenk nach Anspruch 4, **dadurch gekennzeichnet, dass** im zusammengebauten Zustand die Mittelpunkte der sphärischen Flächen an dem Abschlusselement (11) und der Kugelführungsfläche (9) des Gelenkteils (3) zusammenfallen, und dass der Käfig (8) mit einer korrespondierenden sphärischen Fläche (10) an diesen sphärischen Flächen (9b, 12) geführt ist.

6. Gleichlauffestgelenk nach Anspruch 3, 4, oder 5, **dadurch gekennzeichnet, dass** die Kugelführungsfläche (9) mit dem hinterschnittsfreien ersten Abschnitt (9a) und der angrenzenden Anlauffläche (9b) an einer Innenwand des Gelenkaußenteils (3) vorgesehen ist.

7. Gleichlauffestgelenk nach Anspruch 5, **dadurch gekennzeichnet, dass** das Gelenkaußenteil (3) als einseitig geschlossene Glocke ausgebildet ist, wobei der hinterschnittsfreie erste Abschnitt (9a) der Kugelführungsfläche (9) an der offenen Seite liegt und die Anlauffläche (9b) in Richtung des geschlossenen Gelenksbodens (13) angrenzt.

8. Gleichlauffestgelenk nach einem der Ansprüche 2 bis 7, **dadurch gekennzeichnet, dass** das Abschlusselement (11) als Deckel ausgebildet ist, der an dem Gelenkaußenteil (3) an der der Anlauffläche (9b) desselben gegenüberliegenden Seite befestigt ist.

9. Gleichlauffestgelenk nach Anspruch 8, **dadurch gekennzeichnet, dass** der Deckel einen Anschlussabschnitt (14) für einen Faltenbalg aufweist, an einer Außenumfangswand des Gelenkaußenteils (3) befestigt ist, undals Blechumformteil ausgebildet ist.

10. Gleichlauffestgelenk nach Anspruch 8 oder 9, **dadurch gekennzeichnet, dass** der Deckel eine umlaufende Vertiefung (18) aufweist, welche die Kugeln (7) bei maximaler Gelenkbeugung teilweise aufnimmt.

11. Gleichlauffestgelenk nach einem der Ansprüche 1 bis 10, **dadurch gekennzeichnet, dass** die Innenkontur des Gelenkaußenteils (3) mit Ausnahme der Kugellaufbahnen (4) fertiggeschmiedet ist

12. Gleichlauffestgelenk nach einem der Ansprüche 1 bis 11, **dadurch gekennzeichnet, dass** der durch die Kugellaufbahnen (4, 6) definierte Teilkreisdurchmesser (PCD) in Richtung der dem Abschlusselement (11) bzw. Deckel gegenüberliegenden Seite hin zunimmt.

13. Gleichlauffestgelenk nach Anspruch 1 bis 12, **dadurch gekennzeichnet, dass** die Kugellaufbahnen (4, 6) am Gelenkaußenteil (3) und/oder am Gelenkinnenteil (4) in Richtung der dem Abschlusselement (11) bzw. Deckel gegenüberliegenden Seite konisch zulaufen und/oder die Kugellaufbahnen (4, 6) am Gelenkaußenteil (3) und am Gelenkinnenteil (4) geringfügig unterschiedliche Laufbahnschrägungswinkel aufweisen.

14. Gleichlauffestgelenk nach einem der Ansprüche 1 bis 13, **dadurch gekennzeichnet, dass** das Abschlusselement (11) bzw. der Deckel zumindest im Bereich des Anschlags (12) gehärtet, nitriert oder einem sonstigen verschleißmindernden Verfahren unterzogen worden ist oder im Bereich des Anschlags (12) ein Ring aus einem verschleißfesten Material appliziert ist.

15. Gleichlauffestgelenk nach einem der Ansprüche 1 bis 14, **dadurch gekennzeichnet, dass** der Käfig (8) durch mindestens einen Vorsprung an der zu dem Abschlusselement (11) bzw. Deckel weisenden Seite des Gelenkaußenteils (3) oder Gelenkinnenteils (4) axial gesichert ist, wobei der mindestens eine Vorsprung vorzugsweise ein nach der Käfigmontage verformter Abschnitt des Gelenkaußenteils (3) oder Gelenkinnenteils (4) oder ein an dem Gelenkaußenteil (3) oder Gelenkinnenteil (4) angebrachtes Sicherungselement ist.

16. Gleichlauffestgelenk nach einem der Ansprüche 1 bis 15, **dadurch gekennzeichnet, dass** an dem Gelenkaußenteil (3) zwischen dem Anlagebereich des Käfig (8) an dem Gelenkaußenteil (3) und dem Abschlusselement (11) ein Ringvorsprung ausgebildet ist, dessen Innendurchmesser geringfügig kleiner ist als der Außendurchmesser des Käfigs (8).

17. Gelenkwelle, insbesondere Seitenwelle bzw. Hinterachsseitenwelle eines Kraftfahrzeugs, mit einem vorzugsweise radseitig angeordneten Gielchlauffestgelenk (1) nach einem der vorgenannten Ansprüche.

18. Verfahren zur Herstellung eines Gleichlauffestgelenks mit gekreuzten Kugellaufbahnen, nach einem der Ansprüche 1 bis 17, **dadurch gekennzeichnet, dass** eine vormontierte Einheit aus einem Gelenkteil (5, 3), einem Käfig (8) und mehreren Kugeln (7) durch eine reine Axialbewegung mit einem weiteren Gelenkteil (3, 5) zusammengeführt wird und hernach ein Abschlusselement (11) an dem letztgenannten Gelenkteil (3, 5) befestigt wird, das im zusammengebauten Zustand den Käfig (8) axial festlegt.

## Claims

1. Constant velocity joint with crossed ball raceways, comprising:
- a joint outer part (3) and a joint inner part (5) having crossed ball raceways (4, 6) assigned to one another in pairs,
- balls (7) which are arranged in the ball raceway pairs (4, 6), and
- a cage (8) which is fixed to one of the two joint parts (3, 5) and which has windows (8a) for receiving the balls (7), **characterized**
**in that** the cage (8) is fixed axially in one direction by a portion (9b) of a cage guiding surface (9) on the joint part (3, 5) and in the opposite direction by a stop (12) on a separate closure element (11) provided on the joint part (3, 5),
**in that** the cage (8) is adapted to be pushed coaxially into the joint part or onto the joint part, and
**in that** the closure element (11) is adapted to be fastened to the joint part (3, 5) when the cage (8) has been pushed in or on.

2. Constant velocity joint according to Claim 1, **characterized in that** one joint part (3, 5) has an inner contour with an undercut-free cage guiding surface (9), and the closure element (11) and the cage guiding surface (9) form mutually opposite run-on surfaces (9b, 12) for axially fixing the cage (8).

3. Constant velocity joint according to Claim 2, **characterized in that** the run-on surface (9b) of the cage guiding surface (9) for axially supporting the cage (8) is of spherical design and directly adjoins a first undercut-free portion (9a).

4. Constant velocity joint according to Claim 3, **characterized in that** the run-on surface (12) on the closure element (11) is of spherical design.

5. Constant velocity joint according to Claim 4, **characterized in that**, in the assembled state, the central points of the spherical surfaces on the closure element (11) and of the ball guiding surface (9) of the joint part (3) coincide, and **in that** the cage (8) is guided with a corresponding spherical surface (10) on said spherical surfaces (9b, 12).

6. Constant velocity joint according to Claim 3, 4 or 5, **characterized in that** the ball guiding surface (9) is provided with the undercut-free first portion (9a), and the adjoining run-on surface (9b) is provided on an inner wall of the joint outer part (3).

7. Constant velocity joint according to Claim 5, **characterized in that** the joint outer part (3) is formed as a bell which is closed at one side, wherein the undercut-free first portion (9a) of the ball guiding surface (9) is situated at the open side and the run-on surface (9b) is adjacent in the direction of the closed joint base (13).

8. Constant velocity joint according to one of Claims 2 to 7, **characterized in that** the closure element (11) is formed as a cover which is fastened to the joint outer part (3) on the side situated opposite the run-on surface (9b) of said joint outer part.

9. Constant velocity joint according to Claim 8, **characterized in that** the cover has a connecting portion (14) for a bellows, is fastened to an outer circumferential wall of the joint outer part (3), and is formed as a sheet-metal shaped part.

10. Constant velocity joint according to Claim 8 or 9, **characterized in that** the cover has an encircling depression (18) which partially receives the balls (7) at maximum joint deflection.

11. Constant velocity joint according to one of Claims 1 to 10, **characterized in that** the inner contour of the joint outer part (3) is finish-forged with the exception of the ball raceways (4).

12. Constant velocity joint according to one of Claims 1 to 11, **characterized in that** the pitch circle diameter (PCD) defined by the ball raceways (4, 6) increases in the direction of the side opposite the closure element (11) or cover.

13. Constant velocity joint according to Claim 1 to 12, **characterized in that** the ball raceways (4, 6) on the joint outer part (3) and/or on the joint inner part (4) taper conically in the direction of the side opposite the closure element (11) or cover, and/or the ball raceways (4, 6) on the joint outer part (3) and on the joint inner part (4) have slightly different raceway angles of inclination.

14. Constant velocity joint according to one of Claims 1 to 13, **characterized in that** the closure element (11) or the cover is hardened, nitrided or subjected to some other wear-reducing process at least in the region of the stop (12), or a ring composed of a wear-resistant material is applied in the region of the stop (12).

15. Constant velocity joint according to one of Claims 1 to 14, **characterized in that** the cage (8) is secured axially by means of at least one projection on that side of the joint outer part (3) or joint inner part (4) which points towards the closure element (11) or cover, wherein the at least one projection is preferably a portion, which is deformed after the cage is mounted, of the joint outer part (3) or joint inner part (4), or is a locking element which is attached to the joint outer part (3) or joint inner part (4).

16. Constant velocity joint according to one of Claims 1 to 15, **characterized in that** an annular projection is formed on the joint outer part (3) between the region of contact of the cage (8) against the joint outer part (3) and the closure element (11), the inner diameter of which annular projection is slightly smaller than the outer diameter of the cage (8).

17. Articulated shaft, in particular side shaft or rear axle side shaft of a motor vehicle, having a constant Velocity joint (1) according to one of the preceding claims arranged preferably at the wheel side.

18. Method for producing a constant velocity joint having crossed ball raceways, according to one of Claims 1 to 17, **characterized in that** a preassembled unit composed of a joint part (5, 3), a cage (8) and a plurality of balls (7) is brought together with a further joint part (3, 5) by means of a purely axial movement, and subsequently a closure element (11) is fastened to the latter joint part (3, 5), which closure element fixes the cage (8) axially in the assembled state.

## Revendications

1. Joint homocinétique fixe comprenant des chemins de roulement à billes croisés, comprenant:
- une partie extérieure de joint (3) et une partie intérieure de joint (5) avec des chemins de roulement à billes croisés (4, 6) associés mutuellement par paires,
- des billes (7), qui sont disposées dans les paires des chemins de roulement à billes (4,6), et
- une cage (8), qui est fixée sur l'une des deux parties de joint (3, 5) et qui présente des fenêtres (8a) pour recevoir les billes (7), **caractérisé en ce que**
**en ce que** la cage (8) est retenue fixement axialement dans une direction par une portion (9b) d'une surface de guidage de cage (9) sur la partie de joint (3, 5) et dans la direction opposée par une butée (12) sur un élément de terminaison (11) séparé prévu sur la partie de joint (3, 5),
**en ce que** la cage (8) peut être enfoncée coaxialement dans la partie de joint ou poussée sur la partie de joint, et
**en ce que** l'élément de terminaison (11) peut être fixé sur la partie de joint (3, 5) lorsque la cage (8) est enfoncée ou poussée.

2. Joint homocinétique fixe selon la revendication 1, **caractérisé en ce que** l'une des parties de joint (3, 5) présente un contour intérieur avec une surface de guidage de cage (9) sans contre-dépouille et l'élément de terminaison (11) et la surface de guidage de cage (9) constituent des surfaces de butée (9b, 12) mutuellement opposées pour la fixation axiale de la cage (8).

3. Joint homocinétique fixe selon la revendication 2, **caractérisé en ce que** la surface de butée (9b) de la surface de guidage de cage (9) est réalisée sous forme sphérique pour le support axial de la cage (8) et est directement adjacente à une première portion (9a) sans contre-dépouille.

4. Joint homocinétique fixe selon la revendication 3, **caractérisé en ce que** la surface de butée (12) est réalisée sous forme sphérique sur l'élément de terminaison (11).

5. Joint homocinétique fixe selon la revendication 4, **caractérisé en ce que** dans l'état assemblé, les centres des surfaces sphériques sur l'élément de terminaison (11) et la surface de guidage de cage (9) de la partie de joint (3) coïncide, et **en ce que** la cage (8) est guidée avec une surface sphérique correspondante (10) sur ces surfaces sphériques (9b, 12).

6. Joint homocinétique fixe selon la revendication 3, 4 ou 5, **caractérisé en ce que** la surface de guidage de cage (9) avec la première portion (9a) sans contre-dépouille et la surface de butée adjacente (9b) est prévue sur une paroi intérieure de la partie de joint extérieure (3).

7. Joint homocinétique fixe selon la revendication 5, **caractérisé en ce que** la partie de joint extérieure (3) est réalisée sous forme de cloche fermée d'un côté, la première portion (9a) sans contre-dépouille de la surface de guidage de cage (9) étant située sur le côté ouvert et étant adjacente à la surface de butée (9b) dans la direction du fond de joint fermé (13).

8. Joint homocinétique fixe selon l'une quelconque des revendications 2 à 7, **caractérisé en ce que** l'élément de terminaison (11) est réalisé sous forme de couvercle, qui est fixé sur la partie de joint extérieure (3) sur le côté opposé à la surface de butée (9b) de celle-ci.

9. Joint homocinétique fixe selon la revendication 8, **caractérisé en ce que** le couvercle présente une portion de raccordement (14) pour un soufflet, est fixé sur une paroi périphérique extérieure de la partie de joint extérieure (3), et est réalisé sous forme de pièce façonnée en tôle.

10. Joint homocinétique fixe selon la revendication 8 ou 9, **caractérisé en ce que** le couvercle présente un renfoncement périphérique (18) qui reçoit en partie les billes (7) lors d'une flexion maximale du joint.

11. Joint homocinétique fixe selon l'une quelconque des revendications 1 à 10, **caractérisé en ce que** le contour intérieur de la partie de joint extérieure (3) est fini par forgeage à l'exception des chemins de roulement à billes (4).

12. Joint homocinétique fixe selon l'une quelconque des revendications 1 à 11, **caractérisé en ce que** le diamètre du cercle partie (PCD) défini par les chemins de roulement à billes (4, 6) augmente dans la direction du côté opposé à l'élément de terminaison (11) ou au couvercle.

13. Joint homocinétique fixe selon les revendications 1 à 12, **caractérisé en ce que** les chemins de roulement à billes (4, 6) sur la partie de joint extérieure (3) et/ou sur la partie de joint intérieure (4) convergent de manière conique dans la direction du côté opposé à l'élément de terminaison (11) ou du couvercle, et/ou les chemins de roulement à billes (4, 6) sur la partie de joint extérieure (3) et sur la partie de joint intérieure (4) présentent des angles d'oblicité de chemin de roulement légèrement différents.

14. Joint homocinétique fixe selon l'une quelconque des revendications 1 à 13, **caractérisé en ce que** l'élément de terminaison (11) ou le couvercle, au moins dans la région de la butée (12), est trempé, nitruré, ou soumis à un autre procédé réduisant l'usure, ou une bague en matériau résistant à l'usure est appliquée dans la région de la butée (12).

15. Joint homocinétique fixe selon l'une quelconque des revendications 1 à 14, **caractérisé en ce que** la cage (8) est fixée axialement par au moins une saillie sur le côté de la partie de joint extérieure (3) ou de la partie de joint intérieure (4) tourné vers l'élément de terminaison (11) ou le couvercle, l'au moins une saillie étant de préférence une portion de la partie de joint extérieure (3) ou de la partie de joint intérieure (4) façonnée après le montage de la cage, ou un élément de fixation monté sur la partie de joint extérieure (3) ou la partie de joint intérieure (4).

16. Joint homocinétique fixe selon l'une quelconque des revendications 1 à 15, **caractérisé en ce qu'**une saillie annulaire est réalisée sur la partie de joint extérieure (3) entre la région d'appui de la cage (8) sur la partie de joint extérieure (3) et l'élément de terminaison (11), son diamètre intérieur étant légèrement plus petit que le diamètre extérieur de la cage (8).

17. Arbre de transmission, notamment arbre latéral ou arbre latéral d'essieu arrière d'un véhicule automobile, comprenant un joint homocinétique fixe (1) disposé du côté de la roue, selon l'une quelconque des revendications précédentes.

18. Procédé de fabrication d'un joint homocinétique fixe comprenant des chemins de roulement à billes croisés selon l'une quelconque des revendications 1 à 17, **caractérisé en ce qu'**une unité prémontée constituée d'une partie de joint (5, 3), d'une cage (8), et de plusieurs billes (7) est assemblée à une autre partie de joint (3, 5) par un déplacement purement axial, et ensuite un élément de terminaison (11) est fixé sur cette dernière partie de joint (3, 5), qui fixe axialement la cage (8) dans l'état assemblé.
